# EUROPEAN PATENT APPLICATION

(11) **EP 2 746 288 A1**
(43) Date of publication of application: **25.06.2014**
(21) Application number: 13186235.1
(22) Date of filing: 26.09.2013
(51) Int. Cl.: C07F 9/6574, C08K 5/527, H01M 10/052, H01M 10/0525, H01M 10/0567, H01M 4/485, H01M 4/505, H01M 4/525

(54) **Electrolyte additive and electrolyte including same and lithium rechargeble battery including electrolyte**

(30) Priority: 21.12.2012 KR 20120151253
(71) Applicant: Samsung SDI Co., Ltd., Yongin-si, Gyeonggi-do (KR)
(72) Inventor: Chernyshov, Denis, Yongin-si (Gyeonggi-do) (KR); Shin, Woo-Cheol, Yongin-si (Gyeonggi-do) (KR); Shatunov, Pavel Alexandrovich, Yongin-si (Gyeonggi-do) (KR); Tereshchenko, Alexey, Yongin-si (Gyeonggi-do) (KR); Egorov, Vladimir, Yongin-si (Gyeonggi-do) (KR); Khasanov, Makhmut, Yongin-si (Gyeonggi-do) (KR); Jeong, Myung-Hwan, Yongin-si (Gyeonggi-do) (KR)
(74) Representative: Santarelli

(57) **Abstract**

Disclosed is an electrolyte additive represented by the following Chemical Formula 1, and an electrolyte for a rechargeable lithium battery including the electrolyte additive, and a rechargeable lithium battery including the electrolyte.

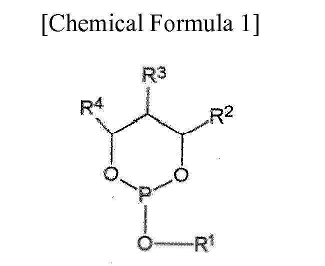

In Chemical Formula 1, R¹ to R⁴ are the same as defined in the detailed description.

## Description

### BACKGROUND

### Field

The invention is related to an electrolyte additive, an electrolyte including the electrolyte additive, and a rechargeable lithium battery including the electrolyte.

### Description of the Related Technology

Batteries transform chemical energy, generated from the electrochemical redox reaction of a chemical material in the batteries, into electrical energy. Such batteries are divided into a primary battery, which should be disposed after consuming all the energy, and a rechargeable battery, which can be charged/discharged many times based on the reversible transformation between chemical energy and electrical energy. Recent developments in high-tech electronics have allowed electronic devices to become small and light in weight, which leads to an increase in portable electronic devices. Such portable electronic devices increasingly demand batteries with high energy density as a power source. Accordingly, research on a lithium rechargeable battery is briskly under progress.

The rechargeable lithium battery is usually fabricated by injecting an electrolyte into an electrode assembly. The electrode assembly generally includes a positive electrode comprising a positive active material capable of intercalating/deintercalating lithium and a negative electrode comprising a negative active material capable of intercalating/deintercalating lithium.

The electrolyte usually includes an organic solvent in which a lithium salt is dissolved. It plays a critical role of determining stability and performance of the rechargeable lithium battery. Particularly, in case of a large capacity rechargeable lithium battery, stability is most importance.

### SUMMARY

One object of the invention is an electrolyte additive which, when used as an additive in an electrolyte, leads the electrolyte to show improved performance while ensuring stability.

Another object of the invention is an electrolyte including this electrolyte additive.

Yet another object of the invention is a rechargeable lithium battery including the electrolyte.

The invention provides an electrolyte additive represented by the following Chemical Formula 1.

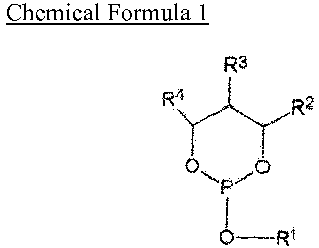

In Chemical Formula 1,

R¹ to R⁴ are independently hydrogen (H), a substituted or unsubstituted C₁ to C₃₀ alkyl group, a substituted or unsubstituted C₃ to C₃₀ cycloalkyl group, a substituted or unsubstituted C₁ to C₃₀ haloalkyl group, a substituted or unsubstituted C₆ to C₃₀ aryl group, a substituted or unsubstituted C₆ to C₃₀ halogenated aryl group, a substituted or unsubstituted C₃ to C₃₀ cycloalkenyl group, a substituted or unsubstituted C₇ to C₂₀ arylalkyl group, a substituted or unsubstituted C₁ to C₂₀ heteroalkyl group, a substituted or unsubstituted C₂ to C₃₀ heterocycloalkyl group, a substituted or unsubstituted C₂ to C₃₀ heteroaryl group, a substituted or unsubstituted C₂ to C₃₀ alkenyl group, a substituted or unsubstituted C₂ to C₃₀ alkynyl group, a substituted or unsubstituted C₁ to C₂₀ aldehyde group, or a combination thereof.

In Chemical Formula 1, R¹ is preferably a substituted or unsubstituted C₁ to C₃₀ fluoroalkyl group, or a substituted or unsubstituted C₁ to C₃₀ perfluoroalkyl group.

In Chemical Formula 1, R² to R⁴ are preferably independently hydrogen (H), or a substituted or unsubstituted C₁ to C₃₀ alkyl group.

The electrolyte additive represented by above Chemical Formula 1 comprises preferably 4-methyl-2-[(2,2,3,3,4,4,5,5-octafluoropentyl)oxy]-1,3,2-dioxaphosphinane. In a preferred embodiment, the electrolyte additive consists in 4-methyl-2-[(2,2,3,3,4,4,5,5-octafluoropentyl)oxy]-1,3,2-dioxaphosphinane.

The invention provides an electrolyte for a rechargeable lithium battery including a lithium salt, a non-aqueous organic solvent, and the electrolyte additive as defined above and represented by Chemical Formula 1.

The electrolyte additive is preferably included in an amount of 0.1 wt% to 20 wt%, more preferably about 2 wt% to 12 wt%, even more preferably of 4 wt% to 6 wt%, based on the total amount of the electrolyte.
When a parameter is defined by a numerical value, this encompasses this specific numerical value but also the values around this specific numerical value.

The invention also provides a rechargeable lithium battery including a positive electrode including a positive active material, a negative electrode including a negative active material, and an electrolyte as defined above.

The positive active material may include over lithiated oxide (OLO).

The positive active material may be a compound represented by the following Chemical Formula 4, Li₁₊ₓM_{y}O_{z}, wherein 0<x<1.5, 0<y<2, 1<z<4, and M is chosen from the group consisting of Ti, V, Cr, Mn, Fe, Co, Ni, Cu, Al, Mg, Zr, Mo, B, and a combination thereof.

Without being bonded by any theory, the applicant believes that, advantageously, the positive active material releases oxygen during charge and discharge of the positive electrode, and that the released oxygen may be bonded to the electrolyte additive.

Accordingly, the invention leads to decrease the exothermic heat of the electrode and thus, secure the stability of the battery. Simultaneously, the invention allows the capture of oxygen gas generated from the electrode and thus, the improvement of the battery performance.

### BRIEF DESCRIPTION OF THE DRAWINGS

FIG. 1 is a schematic view showing a rechargeable lithium battery according to the invention.

FIG. 2 is a reaction scheme showing O₂-capturing mechanism of an electrolyte additive according to the invention.

FIG. 3 is a graph showing the electrochemical stability (in mAhg⁻¹V⁻¹) with respect to the voltage of half-cells according to Example 1 according to the invention and Comparative Example 1.

FIG. 4 is a graph showing the discharge capacity (in mAhg⁻¹) of the half-cells according to Example 1 according to the invention and Comparative Example 1, with respect to the number of cycles.

FIG. 5 is a graph showing the coulombic efficiency (in %) of the rechargeable lithium battery cells according to Example 2 according to the invention and Comparative Example 2, with respect to the number of cycles.

FIG. 6 is a graph showing the discharge capacity (in mAhg⁻¹) of the rechargeable lithium battery cells according to Example 2 according to the invention and Comparative Example 2, with respect to the number of cycles.

### DETAILED DESCRIPTION

This disclosure will be more fully described hereinafter, in which example embodiments are shown. As those skilled in the art would realize, the described embodiments may be modified in various different ways, all without departing from the scope of the present embodiments.

As used herein, when a definition is not otherwise provided, the term 'substituted' may refer to one substituted with a substitutent selected from a halogen (F, Br, Cl, or I), a hydroxyl group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C₁ to C₂₀ alkyl group, a C₂ to C₂₀ alkenyl group, a C₂ to C₂₀ alkynyl group, a C₆ to C₃₀ aryl group, a C₇ to C₃₀ arylalkyl group, a C₁ to C₄ alkoxy group, a C₁ to C₂₀ heteroalkyl group, C₃ to C₂₀ heteroarylalkyl group, a C₃ to C₃₀ cycloalkyl group, a C₃ to C₁₅ cycloalkenyl group, a C₆ to C₁₅ cycloalkynyl group, a C₂ to C₂₀ heterocycloalkyl group, and a combination thereof, instead of hydrogen of a compound.

The electrolyte additive according to one embodiment is a compound represented by the following Chemical Formula 1.

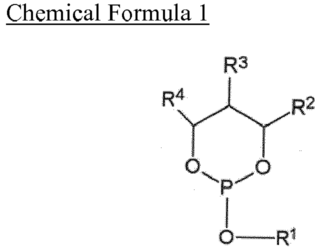

In Chemical Formula 1,

R¹ to R⁴ are independently hydrogen (H), or a substituted or unsubstituted C₁ to C₃₀ alkyl group, a substituted or unsubstituted C₃ to C₃₀ cycloalkyl group, a substituted or unsubstituted C₁ to C₃₀ haloalkyl group, a substituted or unsubstituted C₆ to C₃₀ aryl group, a substituted or unsubstituted C₆ to C₃₀ halgenated aryl group, a substituted or unsubstituted C₃ to C₃₀ cycloalkenyl group, a substituted or unsubstituted C₇ to C₂₀ arylalkyl group, a substituted or unsubstituted C₁ to C₂₀ heteroalkyl group, a substituted or unsubstituted C₂ to C₃₀ heterocycloalkyl group, a substituted or unsubstituted C₂ to C₃₀ heteroaryl group, a substituted or unsubstituted C₂ to C₃₀ alkenyl group, a substituted or unsubstituted C₂ to C₃₀ alkynyl group, a substituted or unsubstituted C₁ to C₂₀ aldehyde group, or a combination thereof.

In Chemical Formula 1, R¹ may be a substituted or unsubstituted C₁ to C₃₀ fluoroalkyl group, or a substituted or unsubstituted C₁ to C₃₀ perfluoroalkyl group.

In Chemical Formula 1, R² to R⁴ are independently hydrogen (H), or a substituted or unsubstituted C₁ to C₃₀ alkyl group.

The electrolyte additive represented by above Chemical Formula 1 may include, preferably may consist in, 4-methyl-2-[(2,2,3,3,4,4,5,5-octafluoropentyl)oxy]-1,3,2-dioxaphosphinane.

The electrolyte additive represented by above Chemical Formula 1 is advantageously added to an electrolyte used in a rechargeable lithium battery and thus improves electrochemical performance and thermal stability of the battery.

The invention is also related to an electrolyte for a rechargeable lithium battery which includes the electrolyte additive as described above and represented by above Chemical Formula 1, a non-aqueous organic solvent, and a lithium salt.
The electrolyte additive is believed to open its cycle so that it is bonded with oxygen. This leads to a recyclization to form a cyclic compound and a film on an electrode surface. By this way, oxygen generated in a battery may be captured.
When 4-methyl-2-[(2,2,3,3,4,4,5,5-octafluoropentyl)oxy]-1,3,2-dioxaphosphinane is used as the most preferred electrolyte additive, it is believed that the compound is captured with oxygen, i.e. is bonded to oxygen gas generated during charge and discharge. This leads to convert the compound into a compound represented by Chemical Formula 1B.

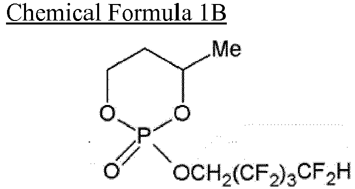

The electrolyte additive is preferably included in an amount of 0.1 wt% to 20 wt%, based on the total amount of the electrolyte. Within this range, it is believed that electrochemical performance and thermal stability of the electrolyte is improved while not deterioration of the battery performance occurs.

In a preferred embodiment, the electrolyte additive is included in an amount of 2 wt% to 12 wt%, preferably of 4 wt% to 6 wt%, based on the total amount of the electrolyte.

The non-aqueous organic solvent of the electrolyte is believed to play a role of transmitting ions taking part in the electrochemical reaction of the battery.

The non-aqueous organic solvent preferably includes, more preferably consists in, a carbonate-based, ester-based, ether-based, ketone-based, alcohol-based, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like.
The ester-based solvent may include methyl acetate, ethyl acetate, n-propyl acetate, dimethylacetate, methylpropionate, ethylpropionate, gamma-butyrolactone, decanolide, gamma-valerolactone, mevalonolactone, caprolactone, and the like.

The ether-based solvent may include dibutyl ether, tetraglyme, diglyme, dimethoxyethane, 2-methyltetrahydrofuran, tetrahydrofuran and the like, and the ketone-based solvent may include cyclohexanone, and the like. The alcohol-based solvent may include ethanol, isopropyl alcohol, and the like. The aprotic solvent include nitriles such as R-CN (wherein R is a C₂ to C₂₀ linear, branched, or cyclic hydrocarbon group, and may include a double bond, an aromatic ring, or an ether bond), amides such as dimethylformamide, dimethylacetamide, dioxolanes such as 1,3-dioxolane, sulfolanes, and the like.

The non-aqueous organic solvent may be used alone or in a mixture. When the organic solvent is used in a mixture, its mixture ratio may be controlled in accordance with the desirable performance of the battery.

The carbonate-based solvent may include a mixture of a cyclic carbonate and a linear carbonate. In an embodiment, the cyclic carbonate and the linear carbonate are usually mixed together in a volume ratio of 1 : 1 to 1 : 9, which may enhance performance of an electrolyte.

In addition, the non-aqueous organic solvent may be prepared by further adding an aromatic hydrocarbon-based organic solvent to the carbonate-based solvent. The carbonate-based solvent and the aromatic hydrocarbon-based organic solvent are usually mixed together in a volume ratio of 1 : 1 to 30 : 1.

The aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The lithium salt of the electrolyte is dissolved in the non-aqueous organic solvent. It supplies advantageously lithium ions in a rechargeable lithium battery, and basically operates the rechargeable lithium battery.It is believed to improve in particular lithium ion transfer between positive and negative electrodes. Such a lithium salt includes usually one or more of LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (wherein, x and y are natural numbers), LiCl, and LiI.

The lithium salt may be used at a concentration of 0.1M to 2.0M. When the lithium salt is included within the above concentration range, it is believed that it improves the electrolyte performance and the lithium ion mobility due to optimal electrolyte conductivity and viscosity.

The electrolyte may further include an additive selected from lithium bis(oxalato)borate (LiBOB), lithium bis(salicylato)borate (LiBSB), and a combination thereof. It is believed that lithium bis(oxalato)borate (LiBOB) and/or lithium bis(salicylato)borate (LiBSB) improves the thermal stability of an electrolyte and the cycle performance of the battery.

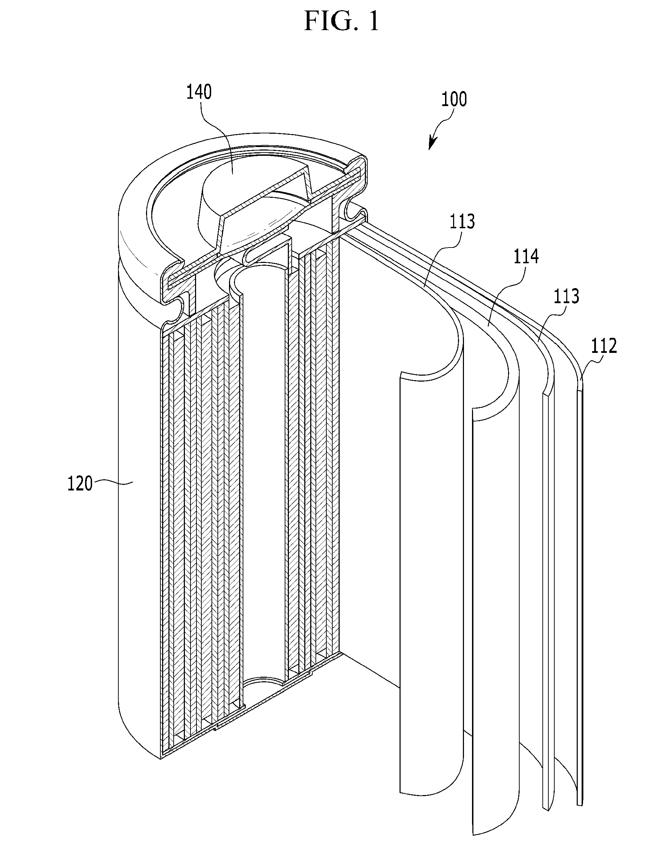

A rechargeable lithium battery according to the invention is described referring to FIG. 1.

FIG. 1 is a schematic view of a rechargeable lithium battery according to the invention.

Referring to FIG. 1, a rechargeable lithium battery 100 according to the invention includes an electrode assembly including a positive electrode 114, a negative electrode 112 facing the positive electrode 114, a separator 113 interposed between the positive electrode 114 and negative electrode 112, and an electrolyte for a rechargeable lithium battery (not shown) impregnating the positive electrode 114, separator 113, and negative electrode 112, a battery case 120 including the battery cell, and a sealing member 140 sealing the battery case 120.

The rechargeable lithium battery 100 is fabricated by sequentially laminating a negative electrode 112, a positive electrode 114, and a separator 113, spirally winding them, and housing the spiral-wound product in a battery case 120.

The negative electrode 112 may a current collector and a negative active material layer disposed on at least one side of the current collector.

The current collector may include a copper foil, a nickel foil, a stainless steel foil, a titanium foil, a nickel foam, a copper foam, a polymer substrate coated with a conductive metal, or a combination thereof.

The negative active material layer includes a negative active material, a binder and optionally, a conductive material.

The negative active material may include a material that reversibly intercalates/deintercalates lithium ions, a lithium metal, a lithium metal alloy, a material being capable of doping and dedoping lithium, or transition metal oxide.

The material that reversibly intercalates/deintercalates lithium ions usually includes a carbon material. The carbon material may be any generally-used carbon-based negative active material in a lithium ion rechargeable battery. Examples of the carbon material include crystalline carbon, amorphous carbon, and a mixture thereof. The crystalline carbon may be non-shaped or sheet, flake, spherical, or fiber shaped natural graphite or artificial graphite. The amorphous carbon may be a soft carbon, a hard carbon, mesophase pitch carbonization products, fired coke, and the like.

Examples of the lithium metal alloy include lithium and a metal of Na, K, Rb, Cs, Fr, Be, Mg, Ca, Sr, Si, Sb, Pb, In, Zn, Ba, Ra, Ge, Al, or Sn.

The material being capable of doping and dedoping lithium may include Si, SiOₓ (0 < x < 2), a Si-C composite, a Si-Q alloy (wherein Q is an alkali metal, an alkaline-earth metal, Group 13 to Group 16 elements, a transition element, a rare earth element, or a combination thereof, and is not Si), Sn, SnO₂, a Sn-C composite, a Sn-R alloy (wherein R is an alkali metal, an alkaline-earth metal, Group 13 to Group 16 elements, a transition element, a rare earth element, or a combination thereof, and not Sn), and the like. The elements Q and R may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof.

The transition metal oxide may include vanadium oxide, lithium vanadium oxide, and the like.

The binder improves properties of binding active material particles with one another and a negative active material with a current collector. The binder includes a non-water-soluble binder, a water-soluble binder, or a combination thereof. The non-water-soluble binder includes polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof. The water-soluble binder includes a styrene-butadiene rubber, an acrylated styrene-butadiene rubber, polyvinyl alcohol, sodium polyacrylate, a copolymer of propylene and a C2 to C8 olefin, a copolymer of (meth)acrylic acid and (meth)acrylic acid alkyl ester, or a combination thereof. When the water-soluble binder is used as a negative electrode binder, a cellulose-based compound may be further used to provide viscosity. The cellulose-based compound includes one or more of carboxylmethyl cellulose, hydroxypropylmethyl cellulose, methyl cellulose, or alkali metal salts thereof. The alkali metal may be Na, K, or Li. The cellulose-based compound may be included in an amount of 0.1 to 3 parts by weight based on 100 parts by weight of the negative active material.

The conductive material improves electrical conductivity of a negative electrode. Any electrically conductive material can be used as a conductive material, unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative, and the like; or a mixture thereof.

The positive electrode 114 includes a current collector and a positive active material layer disposed on the current collector.

The current collector may be made of Al, but is not limited thereto.

The positive active material layer includes a positive active material, a binder, and a conductive material.

The positive active material includes lithiated intercalation compounds that reversibly intercalate and deintercalate lithium ions. The positive active material may include a composite oxide including at least one selected from the group consisting of cobalt, manganese, and nickel, as well as lithium. Specific examples may be the compounds represented by the following chemical formulae:

LiₐA_{1-b}R_{b}D₂ (0.90 ≤ a ≤ 2.5 and 0 ≤ b ≤ 0.5); LiₐE_{1-b}R_{b}O_{2-c}D_{c} (0.90 ≤ a ≤ 2.5, 0 ≤ b ≤ 0.5 and 0 ≤ c ≤ 0.05); LiE_{2-b}R_{b}O_{4-c}D_{c} (0 ≤ b ≤ 0.5, 0 ≤ c ≤ 0.05); LiₐNi_{1-b-c}Co_{b}R_{c}D_{α} (0.90 ≤ a ≤ 2.5, 0 ≤ b ≤ 0.5, 0 ≤ c ≤ 0.05 and 0 < α ≤ 2); LiₐNi_{1-b-c}Co_{b}R_{c}O_{2α}Z_{α} (0.90 ≤ a ≤ 2.5, 0 ≤ b ≤ 0.5, 0 ≤ c ≤ 0.05 and 0 < α < 2); LiₐNi_{1-b-c}Co_{b}R_{c}O_{2-α}Z₂ (0.90 ≤ a ≤ 2.5, 0 ≤ b ≤ 0.5, 0 ≤ c ≤ 0.05 and 0 < α < 2); LiₐNi_{1-b-c}Mn_{b}R_{c}D_{α} (0.90 ≤ a ≤ 2.5, 0 ≤ b ≤ 0.5, 0 ≤ c ≤ 0.05 and 0 < α ≤ 2); LiₐNi_{1-b-c}Mn_{b}R_{c}O_{2-α}Z_{α} (0.90 ≤ a ≤ 2.5, 0 ≤ b ≤ 0.5, 0 ≤ c ≤ 0.05 and 0 < α < 2); LiₐNi_{1-b-c}Mn_{b}R_{c}O_{2-α}Z₂ (0.90 ≤ a ≤ 2.5, 0 ≤ b ≤ 0.5, 0 ≤ c ≤ 0.05 and 0 < α < 2); LiₐNi_{b}E_{c}G_{d}O₂ (0.90 ≤ a ≤ 2.5, 0 ≤ b ≤ 0.9, 0 ≤ c ≤ 0.5 and 0.001 ≤ d ≤ 0.1.); LiₐNi_{b}Co_{c}Mn_{d}GₑO₂ (0.90 ≤ a ≤ 2.5, 0 ≤ b ≤ 0.9, 0 ≤ c ≤ 0.5, 0 ≤ d ≤0.5 and 0.001 ≤ e ≤ 0.1.); LiₐNiG_{b}O₂ (0.90 ≤ a ≤ 2.5 and 0.001 ≤ b ≤ 0.1.); LiₐCoG_{b}O₂ (0.90 ≤ a ≤ 2.5 and 0.001 ≤ b ≤ 0.1.); LiₐMnG_{b}O₂ ( 0.90 ≤ a ≤ 2.5 and 0.001 ≤ b ≤ 0.1.); LiₐMn₂G_{b}O₄ (0.90 ≤ a ≤ 2.5 and 0.001 ≤ b ≤ 0.1.); QO₂; QS₂; LiQS₂; V₂O₅; LiV₂O₅; LiTO₂; LiNiVO₄; Li_{(3-f)}J₂(PO₄)₃(0 ≤ f ≤ 2); Li_{(3-f)}Fe₂(PO₄)₃(0 ≤ f ≤ 2); and LiFePO₄.

In the above chemical formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

The positive active material may be a compound with a coating layer on the surface or a mixture of the active material and a compound with the coating layer thereon. The coating layer may include at least one coating element compound selected from the group consisting of an oxide of the coating element, a hydroxide of the coating element, an oxyhydroxide of the coating element, an oxycarbonate of the coating element, and a hydroxycarbonate of the coating element. The compound for the coating layer may be either amorphous or crystalline. The coating element included in the coating layer may be Mg, Al, Co, K, Na, Ca, Si, Ti, V, Sn, Ge, Ga, B, As, Zr, or a mixture thereof. The coating process may include any conventional processes unless it causes any side effects on the properties of the positive active material (e.g., spray coating, immersing), which is well known to those who have ordinary skill in this art and will not be illustrated in detail.

The positive active material may advantageously release oxygen O₂ during the charge and discharge of the battery.

The positive active material may include over lithiated oxide. The over lithiated oxide includes lithium in a mole ratio of greater than 1. This over lithiated oxide has a high operation voltage and high discharge capacity but is electrically unstable and thus, may release oxygen during the oxidation/reduction reaction.

In a preferred embodiment, the positive active material advantageously includes a compound represented by the Formula Li₁₊ₓM_{y}O_{z}.

In this Formula, 0<x<1.5, 0<y<2, 1<z<4, and M is at least one metal selected from Ti, V, Cr, Mn, Fe, Co, Ni, Cu, Al, Mg, Zr, Mo, and B.

The compound represented by the above Formula is over lithiated oxide, and may advantageously release oxygen during charge and discharge. For example, the x may be in the following range: 0.1<x<1.0.

For example, representative examples of the over lithiated oxide (OLO) have the following composition:

Li_{1.20}Ni_{0.18}Mn_{0.53}Co_{0.09}O₂.

Oxygen in Li₂MnO₃ which is one of the examples of the positive active material, is partially oxidized during charge as follows.

Li₂MnO₃ → 2Li⁺ + 2e⁻ + MnO₂ + 1/2O₂

The OLO positive active material generates oxygen during the charge.

For example, a compound represented by the Formula Li₁₊ₓM_{y}O_{z} or a compound including this compound represented by said formula as a component may be at least one compound selected from the group consisting of xLiMO₂· (1-x)Li₂M'O₃ (0≤x<1), M is a metal selected from Ti, V, Cr, Mn, Fe, Co, Ni, Cu, Al, Mg, Zr, Mo, and B and having an average oxidation number of +3, M' is a metal selected from Ti, V, Cr, Mn, Fe, Co, Ni, Cu, Al, Mg, Zr, Mo, and B and having an average oxidation number of +4) and Li₂MO₂ (M is at least one metal selected from Ni, Co, Fe, Cu, Ti, and V) but is not limited thereto and may advantageously include any lithium metal oxide releasing oxygen gas during the charge and discharge of the battery.

The released oxygen may be removed through a reaction with an additive represented by the above Chemical Formula 1.

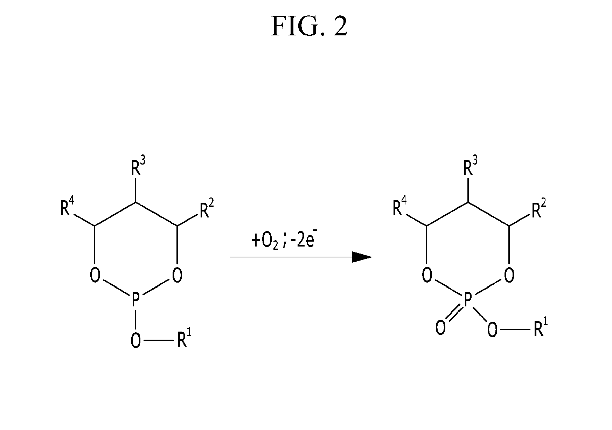

Referring to FIG. 2, the reaction is illustrated.

FIG. 2 is a reaction scheme showing O₂-capturing mechanism of an additive according to the present invention.

Referring to FIG. 2, the additive is bonded with oxygen and forms a layer on the surface of an electrode. Accordingly, the additive may capture oxygen generated from a battery. According to this embodiment, the additive is bonded with oxygen gas generated from activity of Li₂MnO₃ during the charge and discharge and thus, captures and removes the oxygen gas, realizing a rechargeable lithium battery having excellent electrochemical performance. The binder improves binding properties of the positive active material particles to one another and to a current collector. Examples of the binder includepolyvinylalcohol, carboxylmethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive material improves electrical conductivity of a positive electrode. Any electrically conductive material can be used as a conductive material unless it causes a chemical change. Examples of the conductive material include natural graphite, artificial graphite, carbon black, acetylene black, ketjen black, a carbon fiber, a metal powder or a metal fiber including copper, nickel, aluminum, silver, and the like. A conductive material such as a polyphenylene derivative and the like may be mixed.

The negative and positive electrodes may be manufactured in a method of preparing an active material composition by mixing the active material and a binder, and optionally a conductive material in a solvent, and coating the active material composition on a current collector. The solvent includes N-methylpyrrolidone, water and the like but is not limited thereto. The electrode manufacturing method is well known and thus, is not described in detail in the present specification.

The separator 113 separates the positive electrode 114 and negative electrode 112 and provides a path for transferring lithium ions. The separator 113 may be any separator that is generally used in a lithium ion battery. The separator may have low resistance against electrolyte ions and excellent moisturizing capability of an electrolyte. For example, the separator may be selected from a glass fiber, polyester, TEFLON^{®} (tetrafluoroethylene), polyethylene, polypropylene, polytetrafluoroethylene (PTFE), or a combination thereof and may have a non-woven fabric type or a fabric type. For example, a polyolefin-based polymer separator such as polyethylene, polypropylene, and the like is used for a lithium ion battery, a separator coated with a ceramic component or a polymer material may be used to secure heat resistance or mechanical strength. The separator may have a singular layer or multi-layers.

The rechargeable lithium battery may be classified as a lithium ion battery, a lithium ion polymer battery, and a lithium polymer battery according to the presence of a separator and the kind of an electrolyte used therein. The rechargeable lithium battery may have a variety of shapes and sizes and thus, may include a cylindrical, prismatic, coin, or pouch-type battery and a thin film type or a bulky type in size. The structure and manufacturing method for a lithium ion battery pertaining to the present embodiments are well known in the art.

The electrolyte is the same as described above.

The following examples illustrate the aspects of present embodiments described above, in more detail. These examples, however, should not in any sense be interpreted as limiting the scope of the present embodiments.

### Preparation of Electrolyte Additive

### Synthesis Example

### Synthesis of 4-methyl-2-[(2,2,3,3,4,4,5,5-octafluoropentyl)oxy]-1,3,2-dioxaphosphinane

29.90g (0.129mol) of 2,2,3,3,4,4,5,5-octafluoro-1-pentanol and 15.65g (0.155mol) of triethylamine were dissolved in 180ml of hexane to prepare a solution, and another solution was prepared by dissolving 20.00g (0.129mol) of 2-chloro-4-methyl-1,3,2-dioxaphosphinane in 20ml of hexane. The latter solution was dropped to the former solution while the former solution was fervently agitated at -10°C for 3.5 hours. During the process, a formation of a white triethylammonium hydrochloride precipitate was to be found. The reaction mixture was further agitated for 3 hours at room temperature and allowed to stand for one night. The triethylammonium hydrochloride was separated from the resulting mixture and washed with hexane. Then, hexane was removed under the atmospheric pressure, and the residues were distilled under vacuum, obtaining 32.53g of a compound which is 4-methyl-2-[(2,2,3,3,4,4,5,5-octafluoropentyl)oxy]-1,3,2-dioxaphosphinane, represented by the following Chemical Formula 1A, The yield was 72%.

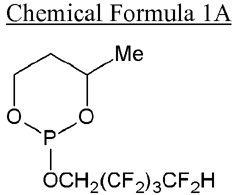

The characteristics for the compound represented by Chemical Formula 1A were measured as follows:

### Structure confirmation and characterization

¹H NMR (CDCl₃, *d*, ppm): 1.20 d (3H, CH₃ for minor isomer, ³*J*HH6.3 Hz); 1.39 d (3H, CH₃ for major isomer, ³*J*HH 6.3 Hz); 2.04 m (1H, CH₂ for major isomer); 2.15 m (1H, CH₂ for major isomer); 3.97 m (1H, CH for major isomer); 4.25 td (2H, CH₂CF₂ for major isomer, ³*J*HF 14.0 Hz, ³*J*HP 7.5 Hz); 4.35 m (2H, CH₂O); 6.04 tt (1H, CHF₂, ²*J*HF52.0 Hz, ³*J*HF 5.5 Hz); signals of protons of CH₂, CH, CH₂CF₂, CH₂O and CHF₂ groups for minor are masked by more intensive signals.

¹³C NMR (*d*, ppm): 21.21 d (CH₃ for minor isomer, ³*J*CP 4.9 Hz); 22.65 (CH₃ for major isomer); 32.75 d (CH₂ for major isomer, ³*J*CP 11.8 Hz); 35.43 d (CH₂ for minor isomer, ³*J*CP4.8 Hz); 58.80 d (CH₂O for major isomer, ²*J*CP 2.6 Hz); 59.70 td (CH₂CF₂ for major isomer, ²*J*CF26.5 Hz, ²*J*CP21.4 Hz); 60.28 d (CH₂O for minor isomer, ²*J*CP 2.0 Hz); 66.56 (CH for minor isomer); 70.12 d (CH for major isomer, ²*J*CP 5.2 Hz); 107.67 tt (HCF₂ for major isomer, ¹*J*CF 254.3 Hz, ²*J*CF₃ 0.6 Hz); 110.00 tqn (HCF₂CF₂ for major isomer, ¹*J*CF₂ 54.1 Hz, ²*J*CF 30.5 Hz); 111.00 tqn (CF₂CF₂CH₂ for major isomer, ¹*J*CF 265.0 Hz, ²*J*CF30.2 Hz); 115.16 ttd (CF₂CH₂ for major isomer, ¹*J*CF₂ 56.9 Hz, ²*J*CF 30.6 Hz, ³*J*CP5.5 Hz); signals of ¹³C of HCF₂CF₂CF₂CH₂ fragment for minor isomer are masked by more intensive signals.

¹⁹F NMR (CDCl₃, *d*, ppm) for major isomer: -137.48 dm (2F, HCF₂, ²*J*HF52.0 Hz); -130.42 m (2F, CF₂); -125.40 m (2F, CF₂); -120.46 m (2F, CF₂).

³¹P NMR (CDCl₃, *d*, ppm): 130.71 t for minor isomer (⁴*J*PF 5.7 Hz) and 134.22 t for major isomer (⁴*J*PF 5.7 Hz).

IR (film, cm⁻¹): 2981 s, 2938 m, 2904 w, 1475 w, 1459 m, 1444 m, 1429 w, 1402 w, 1388 m, 1377 w, 1361 w, 1334 w, 1289 m, 1252 m, 1226 m, 1173 s, 1158 sh, 1132 s, 1097 m, 1074 s, 1034 s, 982 m, 966 m, 925 s, 901 m, 887 m, 842 m, 809 m, sh 767 m, 752 s, 728 m, 704 sh, 629 w, 609 m, 573 w, 561 w, 546 m, 538 w, 520 w, 508 w, 487 w.

Found, %: C, 30.61; H, 3.16; F, 43.62; P, 9.12. C₉H₁₁F₈O₃P. Calcd, %: C, 30.87; H, 3.17; F, 43.41; P, 8.85.

### Preparation of Electrolyte Solution

### Preparation Example 1

An electrolyte solution for a rechargeable lithium battery was prepared by adding 1.3M LiPF₆ as a lithium salt to a mixed solvent prepared by mixing ethylene carbonate (EC), ethylmethylcarbonate (EMC), and dimethylcarbonate (DMC) in a ratio of 3/4/3 (v/v/v) and 10 wt% of the electrolyte additive obtained according to the Synthesis Example above, based on 100 wt% of the electrolyte solution.

### Preparation Example 2

An electrolyte solution was prepared according to the same method as Preparation Example 1 that the electrolyte additive obtained according to the Synthesis Example above was added to 5 wt%.

### Comparative Preparation Example 1

An electrolyte solution for a rechargeable lithium battery was prepared according to the same method as Example 1 except that no electrolyte additive was used.

### Preparation Example of Rechargeable lithium battery cell

### Example 1

Li_{1.20}Ni_{0.18}Mn_{0.53}Co_{0.09}O₂ as a positive active material, polyvinylidene fluoride as a binder, and denka black as a conductive agent were mixed in a weight ratio of 90:4:6, and the mixture was dispersed into N-methyl-2-pyrrolidone to prepare a positive active material slurry. This positive active material slurry was coated on an aluminum foil and then, dried and compressed, fabricating a positive electrode.

A metal lithium was used as a counter electrode.

The positive electrode, the counter electrode, and the electrolyte solution according to Preparation Example 1 were used to fabricate a coin-type half-cell.

### Example 2

Positive slurry was prepared by using Li_{1.20}Ni_{0.18}Mn_{0.53}Co_{0.09}O₂ as a positive active material, polyvinylidene fluoride as a binder, and denka black as a conductive agent in a weight ratio of 90:4:6 and dispersing the mixture into N-methyl-2-pyrrolidone. The slurry was coated on an aluminum foil, dried, compressed, fabricating a positive electrode.

A negative active material slurry was prepared by mixing graphite as a negative active material, styrene-butadiene rubber (SBR) as a binder, and carboxylmethylcellulose as a thickener in a weight ratio of 97.5:1.5:1 and dispersing the mixture into water. The slurry was coated on a copper foil and then, dried and compressed, fabricating a negative electrode.

The positive electrode, the negative electrode, and the electrolyte solution according to Preparation Example 2 were used to fabricate a battery cell.

### Comparative Example 1

A coin-type half-cell was fabricated according to the same method as Example 1 except for using the electrolyte solution according to Comparative Preparation Example 1 instead of the electrolyte solution according to Preparation Example 1.

### Comparative Example 2

A full-cell was fabricated according to the same method as Example 2 except for using the electrolyte solution according to Comparative Preparation Example 1 instead of the electrolyte solution according to Preparation Example 2.

### Evaluation 1: Electrochemical stability of Li/OLO' half-cell

The half-cells according to Example 1 and Comparative Example 1 were examined regarding dQ/dV change depending on a change of Li/Li+.to Voltage/V

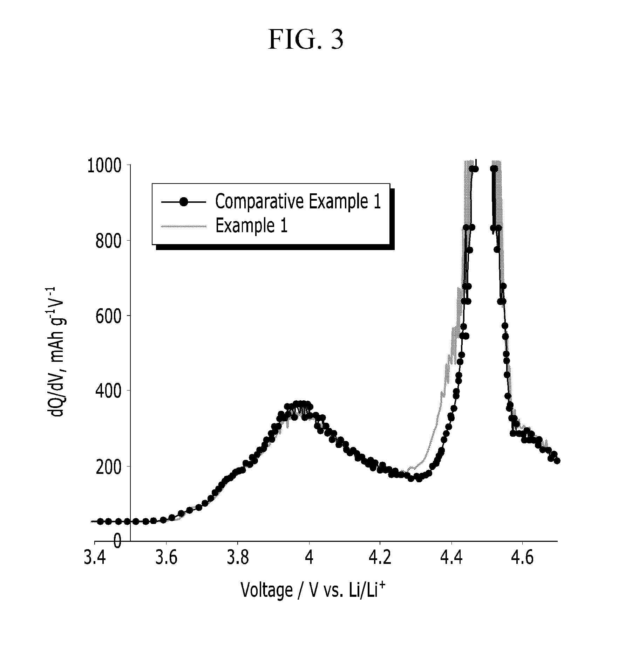

The result is provided in FIG. 3.

FIG. 3 is a graph showing the electrochemical stability (in mAhg⁻¹V⁻¹) with respect to the voltage of half- cells according to Example 1 according to the invention and Comparative Example 1.

Referring to FIG. 3, the half-cell according to Example 1 had a wider peak which exhibited activity of Li₂MnO₃ and less moved toward a positive (+) potential than the ones using an electrolyte solution including no electrolyte additive according to Comparative Example 1. The reason is believed to be that the electrolyte additive was electrochemically decomposed before the activity of Li₂MnO₃ and generation of oxygen almost simultaneously and thus, formed a layer on the positive electrode. Accordingly, the half-cell according to Example 1 according to the invention had better electrochemical stability than the one including no additive.

### Evaluation 2: Cycle performance of'Li/OLO' half-cell

The half-cells according to Example 1 according to the invention and Comparative Example 1 were charged and discharged 50 times (operation voltage: 2.0V to 4.7V) with 1C at 25°C and measures regarding discharge capacity depending on each cycle.

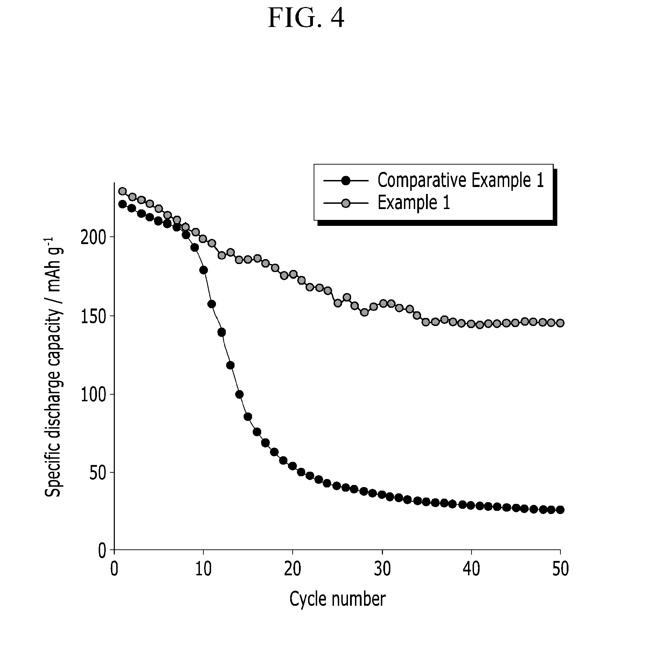

FIG. 4 is a graph showing the discharge capacity (in mAhg⁻¹V⁻¹) with respect to the voltage of the half cells according to Example 1 according to the invention and Comparative Example 1, with respect to the number of cycles.

Referring to FIG. 4, the half cell according to Example 1 according to the invention had improved discharge capacity retention compared with the rechargeable lithium battery cell according to Comparative Example 1.

### Evaluation 3: Coulombic Efficiency of'Graphite/OLO' full cell

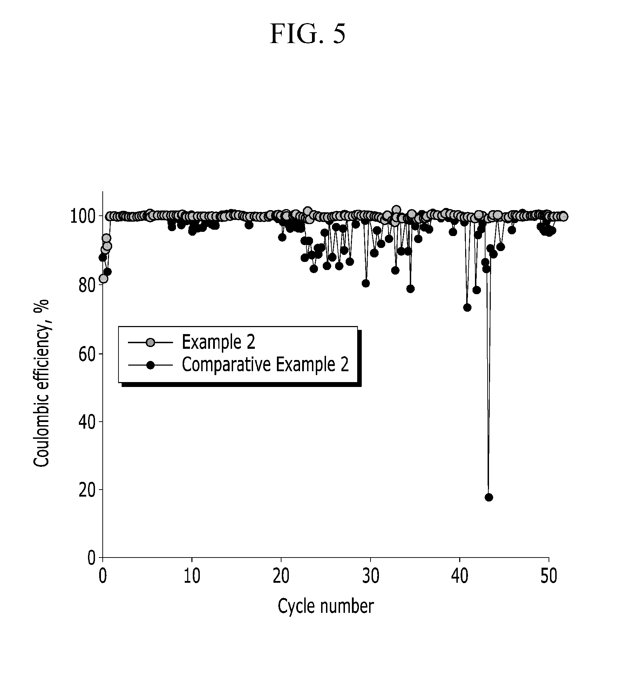

FIG. 5 is a graph showing the coulombic efficiency (in %) of the rechargeable lithium battery cells according to Example 2 according to the invention and Comparative Example 2, with respect to the number of cycles.

Referring to FIG. 5, the 'graphite/OLO' full cell according to Example 2 according to the invention had improved discharge capacity retention compared with the one using an electrolyte solution including no additive according to Comparative Example 2.

Referring to FIG. 5, the full cell according to Example 2 according to the invention had higher irreversible capacity at the first formation cycle than the one according to Comparative Example 2 (Initial Coulombic Efficiency (ICE) at 0.05C: Example 2: 81.6%, Comparative Example 2: 87.5%). However, the cell according to Example 2 according to the invention had coulombic efficiency close to 100% at the additional charge and discharge cycle at 1C. The reason is believed to be that a solid-electrolyte interface (SEI) was formed on the positive electrode. The cell according to Comparative Example 2 had less reversible but unstable cycle characteristics than the one according to Example 2 according to the invention.

### Evaluation 4: Cycle performance of 'Graphite/OLO' full cell

The rechargeable lithium battery cells according to Example 2 and Comparative Example 2 were charged and discharged 300 times (operation voltage: 2.0V to 4.6V) at 1C at 25°C and measured regarding discharge capacity depending on the number of cycles.

The following Table 1 shows specific discharge capacity of the 'graphite/OLO' full cells according to Example 2, according to the invention and Comparative Example 2.

**Table 1**

| Cycle number (cycle) | Specific discharge capacity (mAh/g) | |
|---|---|---|
| | Example 2 According to the invention | Comparative Example 2 |
| 1 | 188.1 | 147.5 |
| 150 | 147.0 | 125.4 |
| 300 | 117.1 | 94.7 |

With respect to 230 mAh/g, which is the theoretical value of specific capacity of a over lithiated oxide positive electrode material, the full cell according to Example 2 according to the invention might more likely reproduce the result than the one according to Comparative Example 2. Herein, the specific capacity difference is generated by an electrolyte additive included in an electrolyte solution. Accordingly, said additive used in Example 2 according to the invention had excellent effects compared with no additive in Comparative Example 2.

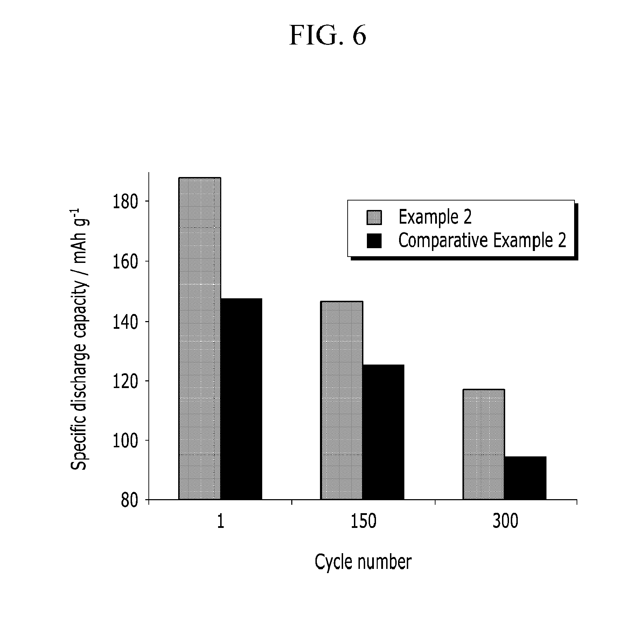

FIG. 6 is a graph showing the discharge capacity (in mAhg⁻¹) of the rechargeable lithium battery cells according to Example 2 according to the invention and Comparative Example 2, with respect to the number of cycles.

Referring to FIG. 6, the rechargeable lithium battery cell according to Example 2 according to the invention had improved discharge capacity retention compared with the 'graphite/OLO' full cell using an electrolyte solution including no additive according to Comparative Example 2.

### Evaluation 5: Exothermic Heat Measurement using Differential Scanning Calorimetry (DSC)

Each rechargeable lithium battery cell was fabricated according to the same method as Example 2 according to the invention except for respectively using the electrolyte solutions according to Preparation Examples 1 and 2 and Comparative Preparation Example 1. The rechargeable lithium battery cells were full-charged at 4.6V and separated in a drying room, obtaining electrodes. The electrodes were washed and dried. Then, the electrodes were put in a stainless steel pan and sealed and then, measured regarding exothermic heat using differential scanning calorimetry (TA instruments auto Q20). The calorific value was measured by increasing 10°C per a minute in a range of 50°C to 400°C.

The results are provided in the following Table 2.

**Table 2**

| Amount of additive | Exothermic heat (50-200°C), J/g | Exothermic heat (200-400°C), J/g | Total exothermic heat (sum), J/g | Percentage (relative to no electrolyte additive), % |
|---|---|---|---|---|
| 0 wt% | 65 | 415 | 480 | 100 |
| 5 wt% | 50 | 276 | 326 | 68 |
| 10 wt% | 41 | 241 | 312 | 65 |

Referring to Table 2, the cells respectively including the electrotlyes according to Preparation Examples 1 and 2 had 30% decreased exothermic heat than the one including no electrolyte additive.

The cells were measured regarding exothermic heat according to the same method as used in Table 2 except for pouring the same electrolyte solution as used in each cell on the dried electrode.

The results are shown in the following Table 3.

**Table 3**

| Amount of additive | Exothermic heat (50-200°C), J/g | Exothermic heat (200-400°C), J/g | Total exothermic heat (Sum), J/g | Percentage (relative to no additive), % |
|---|---|---|---|---|
| 0 wt% | 130 | 428 | 558 | 100 |
| 5 wt% | 111 | 135 | 246 | 44 |
| 10 wt% | 103 | 132 | 235 | 42 |

Referring to Table 3, the cells using the electrolyte solutions including an additive according to Preparation Examples 1 and 2 had decrease exothermic heat despite further pouring an electrolyte solution on a dry electrode. The cells using the electrolytes according to Preparation Examples 1 and 2 had 55% decreased exothermic heat compared with the cell using an electrolyte including no additive.

Referring to Tables 2 and 3, the rechargeable lithium battery cells respectively including an additive according to Preparation Examples 1 and 2 had decreased exothermic heat. The reason is believed to be that the additive was combined with oxygen gas and formed a layer on the positive electrode and decreasing exothermic heat from the positive electrode.

While these embodiments have been described in connection with what is presently considered to be practical example embodiments, it is to be understood that the embodiments are not limited to the disclosed embodiments, but, on the contrary, is intended to cover various modifications and equivalent arrangements included within the scope of the appended claims.

## Claims

1. An electrolyte additive represented by the following Chemical Formula 1: 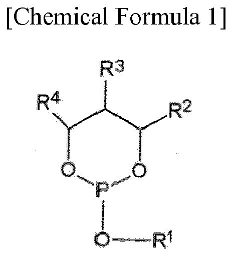 wherein
R¹ to R⁴ are independently hydrogen (H), or a substituted or unsubstituted C₁ to C₃₀ alkyl group, a substituted or unsubstituted C₃ to C₃₀ cycloalkyl group, a substituted or unsubstituted C₁ to C₃₀ haloalkyl group, a substituted or unsubstituted C₆ to C₃₀ aryl group, a substituted or unsubstituted C₆ to C₃₀ halogenated aryl group, a substituted or unsubstituted C₃ to C₃₀ cycloalkenyl group, a substituted or unsubstituted C₇ to C₂₀ arylalkyl group, a substituted or unsubstituted C₁ to C₂₀ heteroalkyl group, a substituted or unsubstituted C₂ to C₃₀ heterocycloalkyl group, a substituted or unsubstituted C₂ to C₃₀ heteroaryl group, a substituted or unsubstituted C₂ to C₃₀ alkenyl group, a substituted or unsubstituted C₂ to C₃₀ alkynyl group, a substituted or unsubstituted C₁ to C₂₀ aldehyde group, or a combination thereof.

2. The electrolyte additive according to claim 1, wherein in Chemical Formula 1, R¹ is a substituted or unsubstituted C₁ to C₃₀ fluoroalkyl group, or a substituted or unsubstituted C₁ to C₃₀ perfluoroalkyl group.

3. The electrolyte additive according to any one of claims 1 to 2, wherein in Chemical Formula 1, R² to R⁴ are independently hydrogen (H), or a substituted or unsubstituted C₁ to C₃₀ alkyl group.

4. The electrolyte additive according to any one of claims 1 to 3, wherein the electrolyte additive represented by Chemical Formula 1 comprises 4-methyl-2-[(2,2,3,3,4,4,5,5-octafluoropentyl)oxy]-1,3,2-dioxaphosphinane.

5. An electrolyte for a rechargeable lithium battery, comprising a lithium salt,
a non-aqueous organic solvent and
an electrolyte additive represented by Chemical Formula 1: 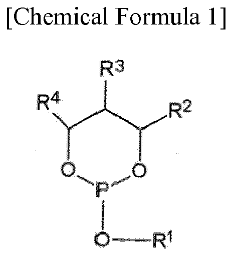 wherein
R¹ to R⁴ are independently hydrogen (H), or a substituted or unsubstituted C₁ to C₃₀ alkyl group, a substituted or unsubstituted C₃ to C₃₀ cycloalkyl group, a substituted or unsubstituted C₁ to C₃₀ haloalkyl group, a substituted or unsubstituted C₆ to C₃₀ aryl group, a substituted or unsubstituted C₆ to C₃₀ halgenated aryl group, a substituted or unsubstituted C₃ to C₃₀ cycloalkenyl group, a substituted or unsubstituted C₇ to C₂₀ arylalkyl group, a substituted or unsubstituted C₁ to C₂₀ heteroalkyl group, a substituted or unsubstituted C₂ to C₃₀ heterocycloalkyl group, a substituted or unsubstituted C₂ to C₃₀ heteroaryl group, a substituted or unsubstituted C₂ to C₃₀ alkenyl group, a substituted or unsubstituted C₂ to C₃₀ alkynyl group, a substituted or unsubstituted C₁ to C₂₀ aldehyde group, or a combination thereof.

6. The electrolyte for a rechargeable lithium battery according to claim 5, wherein in Chemical Formula 1, R¹ is a substituted or unsubstituted C₁ to C₃₀ fluoroalkyl group, or a substituted or unsubstituted C₁ to C₃₀ perfluoroalkyl group.

7. The electrolyte for a rechargeable lithium battery according to any one of claims 5 to 6, wherein in Chemical Formula 1, R² to R⁴ are independently hydrogen (H), or a substituted or unsubstituted C1 to C30 alkyl group.

8. The electrolyte for a rechargeable lithium battery according to any one of claims 5 to 7, wherein the electrolyte additive represented by above Chemical Formula 1 comprises 4-methyl-2-[(2,2,3,3,4,4,5,5-octafluoropentyl)oxy]-1,3,2-dioxaphosphinane.

9. The electrolyte for a rechargeable lithium battery according to any one of claims 5 to 8, wherein the additive is included in an amount of 0.1 to 20 wt%, preferably of 2 to 12 wt %, based on the total amount of the electrolyte.

10. A rechargeable lithium battery, comprising
a positive electrode including a positive active material,
a negative electrode including a negative active material, and
an electrolyte comprising:
a lithium salt,
a non-aqueous organic solvent and
an electrolyte additive represented by Chemical Formula 1: 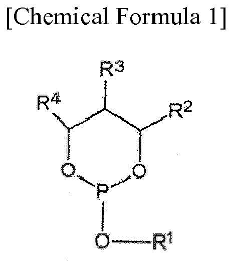
wherein
R¹ to R⁴ are independently hydrogen (H), or a substituted or unsubstituted C₁ to C₃₀ alkyl group, a substituted or unsubstituted C₃ to C₃₀ cycloalkyl group, a substituted or unsubstituted C₁ to C₃₀ haloalkyl group, a substituted or unsubstituted C₆ to C₃₀ aryl group, a substituted or unsubstituted C₆ to C₃₀ halgenated aryl group, a substituted or unsubstituted C₃ to C₃₀ cycloalkenyl group, a substituted or unsubstituted C₇ to C₂₀ arylalkyl group, a substituted or unsubstituted C₁ to C₂₀ heteroalkyl group, a substituted or unsubstituted C₂ to C₃₀ heterocycloalkyl group, a substituted or unsubstituted C₂ to C₃₀ heteroaryl group, a substituted or unsubstituted C₂ to C₃₀ alkenyl group, a substituted or unsubstituted C₂ to C₃₀ alkynyl group, a substituted or unsubstituted C₁ to C₂₀ aldehyde group, or a combination thereof.

11. The rechargeable lithium battery according to claim 10, wherein in Chemical Formula 1, R¹ is a substituted or unsubstituted C₁ to C₃₀ fluoroalkyl group, or a substituted or unsubstituted C₁ to C₃₀ perfluoroalkyl group.

12. The rechargeable lithium battery according to any one of claims 10 and 11, wherein in Chemical Formula 1, R² to R⁴ are independently hydrogen (H), or a substituted or unsubstituted C₁ to C30 alkyl group.

13. The rechargeable lithium battery according to any one of claims 10 to 12, wherein the electrolyte additive represented by above Chemical Formula 1 comprises 4 methyl-2-[(2,2,3,3,4,4,5,5-octafluoropentyl)oxy]-1,3,2-dioxaphosphinane.

14. The rechargeable lithium battery according to any one of claims 10 to 13, wherein the additive is included in an amount of 0.1 to 20 wt%, preferably 2 to 12 wt %, based on the total amount of the electrolyte.

15. The rechargeable lithium battery according to any one of claims 10 to 14, wherein the positive active material comprises a compound represented by Formula Li₁₊ₓM_{y}O_{z}, wherein 0<x<1.5, 0<y<2, 1<z<4, and M is chosen from the group consisting of Ti, V, Cr, Mn, Fe, Co, Ni, Cu, Al, Mg, Zr, Mo, B, or a combination thereof.
